Europäisches Patentamt

European Patent Office

Office européen des brevets

(19)

(11) Veröffentlichungsnummer: **0 225 314 B1**

# EUROPÄISCHE PATENTSCHRIFT

(12)

(45) Veröffentlichungstag der Patentschrift: 23.10.91

(51) Int. Cl.⁵: **B01D 1/22**

(21) Anmeldenummer: 86890332.9

(22) Anmeldetag: 01.12.86

(54) **Verfahren zur Rotorsteuerung für Dünnschichtbehandlungsanlagen und Vorrichtung zur Durchführung des Verfahrens.**

(30) Priorität: 05.12.85 AT 3530/85

(43) Veröffentlichungstag der Anmeldung:
10.06.87 Patentblatt 87/24

(45) Bekanntmachung des Hinweises auf die
Patenterteilung:
23.10.91 Patentblatt 91/43

(84) Benannte Vertragsstaaten:
BE CH DE FR GB LI NL

(56) Entgegenhaltungen:
CH-A- 486 681
DE-B- 1 263 693

(73) Patentinhaber: **Österreichisches Forschungszentrum Seibersdorf Ges.m.b.H.
Kramergasse 1
A-1010 Wien(AT)**

(72) Erfinder: **Leichter, Peter
Saikogasse 59/7/15
A-1220 Wien(AT)**
Erfinder: **Einramhof, Friedrich
Ob. Kirchengasse 11
A-2452 Mannersdorf(AT)**
Erfinder: **Winkelhofer, Walter, Dipl.-Ing.
Wienergasse 6/1/2
A-1210 Wien(AT)**
Erfinder: **Knotik, Karl, Dr.
Jägergasse 14
A-7000 Eisenstadt(AT)**

**Beschreibung**

Die Erfindung betrifft ein Verfahren zur Steuerung der Rotordrehzahl für Dünnschichtbehandlungsanlagen, mit beweglichen, gelenkig auf dem Rotor gelagerten oder elastisch ausgebildeten Abstreifelementen sowie eine Rotorsteuerung für einen Abstreifelemente tragenden Rotor einer Dünnschichtbehandlungsanlage, bei der die Abstreifelemente am Rotor beweglich gelagert bzw. elastisch ausgebildet sind.

Die bekannten Dünnschichtbehandlungsapparate, welche vor allem der erfindungsgemäßen Vorrichtung zugrundeliegen, bestehen im allgemeinen aus einem beheizbaren rotationssymmetrischen zylindrischen oder kegelmantelförmigen Gehäuse, in dem ein mittels Antriebsmotor angetriebener Rotor angeordnet ist. Dieser Rotor weist Verteilungs- und Abstreifelemente auf, die dazu dienen, die vorzugsweise im oberen Teil des Apparates vorwiegend radial oder tangential eingebrachte zu verdampfende Flüssigkeit an der Innenwandung gleichmäßig zu verteilen und in der Folge die entstehenden Konzentrate bzw. Rückstände von der beheizten Wand zu entfernen. Spezielle Ausführungen von Dünnschichtverdampfern, besonders sogenannte Dünnschichttrockner haben die Aufgabe, Trockengut aus Flüssigkeiten zu gewinnen bzw. abzutrennen. Bei diesen, vorwiegend in senkrechter Aufstellungsform betriebenen Dünnschichttrocknern kommt der Gestaltung der Abstreifelemente besondere Bedeutung zu. Speziell in jenem Teil des Dünnschichttrockners, in dem der Übergang von der flüssigen in die feste Phase erfolgt, bilden sich sehr leicht Ablagerungen, wie Klumpen, Krusten und harte Beläge, die von den Abstreifelementen entfernt werden sollen. Hiezu werden, insbesondere bei der erfindungsgemäßen Vorrichtung z.B. parallel und symmetrisch zur Rotorachse beweglich montierte Abstreifelemente eingesetzt, die geeignet sind, durch z.B. pendelnde, schwenkende oder oszillierende Bewegung an der Heizfläche anhaftendes Material abzuschlagen. Eine erfindungsgemäße Rotorsteuerung ist für Dünnschichtbehandlungsanlagen bestimmt, die im wesentlichen aus einem rotationssymmetrisch um den Rotor angeordneten Gehäuse mit Heizmantel, einer Einspeisung für die zu verdampfende Flüssigkeit, dem Rotor mit Antriebsmotor mit einem darauf angebrachten Verteilring und beweglichen Abstreifelementen, die um einen Drehpunkt pendelnd, schwenkend oder oszillierend auf der Rotorachse befestigt aufgebracht sein kann. Eine konstruktiv vorteilhafte gegen Krustenbildung schon weitgehend unempfindliche Ausführung eines Rotors mit beweglichen Abstreifelement ist z.B. in der AT-C-372 618 dargestellt.

Ziel der vorliegenden Erfindung ist es, die Bildung von Krusten, Klumpen, harten Belägen od.dgl. hintanzuhalten, mit der Absicht, einen störungsfreien fortlaufenden Betrieb aufrechtzuerhalten, und weiters ein feinteiliges homogenes Trockenprodukt zu erhalten. Beim Betrieb eines Dünnschichttrockners mit zur Bildung von Krusten, Klumpen und/oder Belägen neigenden Substanzen, wird die Beweglichkeit der Abstreifelemente zunehmend verringert. Durch Bildung von Ablagerungen, Krusten od.dgl. insbesondere an den Arbeitskanten der Abstreifelemente und der Trocknerwandung wird nicht nur die Ausbeute und die Qualität des Trockenproduktes verschlechtert, es kommt auch durch die gebildeten Ablagerungen zu einer schleifenden Reibung zwischen Rotor und Trocknerwandung und dadurch zu einer Zunahme des mechanischen Widerstandes und damit verbunden zu einer steigenden Belastung des Rotors und des Antriebsmotors.

Erfindungsgemäß ist ein Verfahren der eingangs genannten Art dadurch gekennzeichnet, daß zur Vermeidung bzw. Entfernung von Produktablagerungen an den Rotor- bzw. Abstreifelementoberflächen bzw. an den von den Abstreifelementen überstrichenen Innenwänden der Dünnschichtbehandlungsanlage während des Betriebes die Drehzahl des Rotors verändert wird, und daß danach, gegebenenfalls nach einer vorbestimmten Zeitspanne, der Rotor wiederum auf die vorgewählte Nenndrehzahl oder eine andere vorgegebene Drehzahl gebracht wird, wobei entweder die ein Maß für die Ausbildung von Ablagerungen in der Anlage, insbesondere auf dem Rotor bzw. der Innenwand darstellenden Anlagenparameter registriert werden und in Abhängigkeit der registrierten Werte der Anlageparamter die Drehzahl des Rotors verändert wird, oder die Drehzahl des Rotors in vorgegebenen Zeitintervallen verändert wird.

Besonders vorteilhaft ist es, wenn die Änderungen der Drehzahl des Rotors abrupt erfolgen bzw. die Änderungen der Drehzahl durch Erhöhen oder Verringern der Drehzahl oder Anhalten des Rotors erfolgen. Einfach ist es, wenn als Anlagenparameter zur Feststellung der Ablagerungen in der Anlage die Belastung des Rotors die Schichtdicke auf der Innenwand, der Lagerdruck od.dgl. registriert werden. Schließlich können die Veränderungen der Drehzahl in regelmäßigen aufeinanderfolgenden Intervallen erfolgen.

Diese Beschleunigung und/oder Verzögerungen vergrößern bzw. unterstützen die Bewegung der Abstreifelemente, sodaß durch zusätzliche, abrupte Schüttelbewegung die Ausbildung von Belägen an den Innenwänden und Endbereichen der Abstreifelemente hintangehalten bzw. diese entfernt und zerkleinert werden und dadurch ein gleichmäßiger kontinuierlicher Betrieb des Dünnschichttrockners ermöglicht, die Ökonomie verbessert und die Qualität des Trockenproduktes entscheidend erhöht wird.

Die Beschleunigungs- und/oder Verzögerungswirkungen auf die Umfanggeschwindigkeit bzw. drehzahl des Rotors werden z.B. dadurch erreicht, daß der Rotor eines Dünnschichtverdampfers, z.B. eines Dünnschichttrockners durch eine belastungskonforme Rotorsteuerung, bestehend aus einem Rotorwellenantrieb, einer Vorrichtung zur Messung der Rotorbelastung, mindestens einer belastungsgesteuerten Schaltvorrichtung zur Herbeiführung von Änderungen der Drehzahl des Rotors und mindestens einer Zeitschaltvorrichtung zur Begrenzung der Dauer des Betriebes mit veränderter Drehzahl, so betrieben wird, daß bei Überschreitung eines oberen Sollwertes der Rotorbelastung eine Drehzahländerung in Abweichung von der Nenndrehzahl herbeigeführt wird, diese Drehzahländerung nach einer vorgewählten Zeitspanne wieder rückgängig gemacht wird und daß diese Schaltvorgänge gegebenenfalls so lange wiederholt werden, bis der obere Sollwert der Rotorbelastung wieder unterschritten ist und sodann wieder auf Nenndrehzahl geschaltet wird.

Um in gewissen Fällen ein Pendeln des Istwertes um den Sollwert und damit verbunden eine im Durchschnitt hoch liegende Belastung, sowie eine Häufung der Schaltvorgänge zu vermeiden, wird erfindungsgemäß vorgeschlagen, daß die Drehzahländerungen so oft durchgeführt werden, bis ein vorgewählter unterer Sollwert der Rotorbelastung bzw. eines Anlagenparameters unterschritten wird und daß sodann dem Rotor wieder auf Nenndrehzahl geschaltet wird. Ferner ist es vorteilhaft, wenn die Drehzahländerungen im Bereich unterhalb des oberen Sollwertes oder oberhalb des unteren Sollwertes der Rotorbelastung bzw. eines Anlagenparameters in vorgewählten, gegebenenfalls konstanten zeitlichen Abständen durchgeführt werden. Eine Änderung der Drehzahl kann beispielsweise durch Aus- und Einschalten des Rotorwellenantriebes erfolgen. Im Falle eines Rotorwellenantriebes durch einen Elektromotor können die Änderungen der Drehzahl durch Änderung der Betriebsparameter dieses Motors, wie zum Beispiel der Spannung oder der Frequenz, herbeigeführt werden. Eine besonders vorteilhafte Vorgangsweise zur Herbeiführung von Drehzahländerungen ist die Verwendung eines polumschaltbaren Motors, der für den Betrieb mit mindestens zwei Drehzahlen konstruiert ist. Besonders vorteilhaft im Hinblick auf eine automatische Regelung ist die Verwendung eines impulsgesteuerten frequenzabhängigen Schrittmotors, der sowohl in der Betriebsart mit Konstantspannung als auch Konstantstrom betrieben werden kann. Für eine elektronische Regelung und für den Betrieb mit hohen Leistungen sind auch thyristorgeregelte Gleichstrommotoren hervorragend geeignet. Selbstverständlich können auch mechanische Elemente, wie Getriebe oder Kupplungen verwendet werden, um die gewünschten abrupten Drehzahländerungen herbeizuführen. Eine interessante Alternative bietet die Verwendung einer Wirbelstrombremse, insbesondere bei sehr großen, d.h. bei Rotoren mit großer Masse. Dabei wird vorteilhafterweise der Rotorantrieb gleichzeitig mit oder unmittelbar vor Betätigung der Wirbelstrombremse abgeschaltet.

Die Antriebsmotoren können möglichst elastisch direkt oder indirekt über Kraftübertragungsorgane wie Keilriemen, Zahnräder, Ketten, Zahnriemen und dergleichen, mit der Rotorwelle verbunden sein. Die Wahl der Antriebsart hängt von den Erfordernissen und der Aufgabenstellung ab. Wichtige Voraussetzungen für die Wahl der geeigneten Antriebsart sind unter anderem die Größe der Rotoren, die Masse und der Drehradius der beweglichen Abstreifelemente, die Eigenschaften der zu verdampfenden Flüssigkeit bzw. des gebildeten Trockenproduktes, sowie die Betriebsparameter des Dünnschichtverdampfers wie Temperatur, Druck und Durchsatz. So können beispielsweise für kleinere Rotoren bis etwa 200 mm Durchmesser impulsgesteuerte Schrittmotoren, für Rotoren mittlerer Größe bis etwa 400 mm polumschaltbare Drehstrommotoren und für große Rotoren frequenzgesteuerte Drehstrommotoren oder thyristorgesteuerte Gleichstrommotoren verwendet werden. Für besondere Einsatzfälle können auch andere Antriebsmotoren wie z.B. Verbrennungsmotoren angewendet werden.

Die Belastung des Rotors kann durch verschiedene Maßnahmen erfaßt werden. Beispielsweise können Drehmomentaufnehmer verwendet werden, die entweder mit der Rotorwelle oder im Falle einer indirekten Kraftübertragung mit der Welle des Antriebsmotors oder den Kraftübertragungsorganen verbunden sind. Das Ausgangssignal wird, gegebenenfalls unter Verwendung eines Meßwertwandlers, zur Darstellung des Istwertes der Rotorbelastung herangezogen. Nach Vergleich des Sollwertes mit dem Istwert der Rotorbelastung wird, falls der Istwert über dem Sollwert liegt, ein Schaltorgan angesteuert und die gewünschte Drehzahländerung herbeigeführt. An Stelle eines Drehmomentaufnehmers können auch andere Maßnahmen und/oder Vorrichtungen verwendet werden, wie z.B. Wirkstromwandler oder Kraftaufnehmer.

Vorteilhafterweise werden zur Darstellung des Istwertes sowie für den Vergleich von Sollwert und Istwert der Rotorbelastung elektronische Regler verwendet, und mit dem Ausgangssignal, das in Form einer Spannung oder eines Stromes oder von Impulsen vorliegen kann, geeignete Schaltorgane wie Relais, Schütze kontaktlose elektronische Halbleiterbauteile und dergleichen, angesteuert werden.

Da es bei der erfindungsgemäßen belastungskonformen Rotorsteuerung auf die Bildung von weitgehend abrupten Beschleunigungs- und/oder Verzögerungswirkungen ankommt, ist es unerheblich, ob diese Wirkungen durch eine Verringerung oder eine Erhöhung der drehzahl gegenüber der Nenndrehzahl erreicht werden. Die Nenndrehzahl, das ist jene Drehzahl, bei der der Dünnschichtverdampfer eine optimale Betriebscharakteristik aufweist, hängt unter anderem wesentlich von der Baugröße, insbesondere dem Durchmesser des Rotors, der Form, Masse und dem Drehradius bzw. der Elastizität der beweglichen Abstreifelemente und den Eigenschaften der zu verdampfenden Flüssigkeit bzw. des gebildeten Trockenproduktes ab. Generell arbeiten Dünnschichtverdampfer kleiner Bauart mit einer höheren Nenndrehzahl als größere. Das Ausmaß der erfindungsgemäßen Änderung der Drehzahl hängt von der Masse des Rotors, den Antriebsmotoren, den gegebenenfalls verwendeten Kraftübertragungsorganen, der Masse, Form und dem Drehradius bzw. der Elastizität der beweglichen Abstreifelemente und, da es sich um die Bildung von Beschleunigungs- und/oder Verzögerungswirkungen handelt von der Zeit ab. Erfahrungsgemäß werden bei kleineren Rotoren kleinere Beträge einer Drehzahländerung als bei großen Rotoren benötigt. Erfindungsgemäß wird nun vorgeschlagen, daß die Drehzahländerungen durch Verringerung und/oder Erhöhung der drehzahl vorgenommen werden und daß die Drehzahländerungen durch Verringerung der drehzahl um 2 bis 80%, vorzugsweise um 3 bis 60%, insbesondere um 10 bis 50%, oder Erhöhung der drehzahl um 1 bis 50%, vorzugsweise 1 bis 40%, insbesondere 10 bis 30%, erfolgen. Hiebei ist es vorteilhaft, wenn die Zeitdauer für das Erreichen der verringerten oder erhöhten Drehzahl 1 ms bis 3 sec., vorzugsweise 10ms bis 1 sec., insbesondere 500 ms, beträgt. Eine vorteilhafte ökonomische Arbeitsweise ergibt sich, wenn man erfindungsgemäß auch, oder zusätzlich, im Bereich unterhalb des oberen Sollwertes und/oder oberhalb des unteren Sollwertes der Rotorbelastung Drehzahländerungen durch Verringerung und/oder Erhöhung der Nenndrehzahl vornimmt und wenn diese Drehzahländerungen mindestens 1%, vorzugsweise 20%, der Nenndrehzahl betragen.

Um die im allgemeinen gewünschten kräftigen abrupten Beschleunigungs- und/oder Verzögerungswirkungen zu erzielen, ist es wünschenswert, die Änderungen der Drehzahl innerhalb einer kurzen Zeitspanne herbeizuführen. Je nach Betriebserfordernis und Ausführung des Rotors und der Abstreifelemente, können die Zeitspannen, innerhalb derer die Änderungen der Drehzahl herbeigeführt und wieder rückgängig gemacht werden, gleich groß oder verschieden groß sein. Der Rotor eines Dünnschichtverdampfers kann also zum Beispiel sehr rasch abgebremst werden, um eine gewünschte große Verzögerungswirkung zu erreichen und im Vergleich dazu langsamer beschleunigt zu werden, oder auch umgekehrt. Es ist sinnvoll, die veränderten Drehzahlen zumindest so lange beizubehalten, bis die Beschleunigungs- oder Verzögerungswirkung abgeklungen, bzw. bis die beweglichen Abstreifelemente in ihre normale Arbeitsposition zurückgekehrt sind. Dies wird erfindungsgemäß dadurch erreicht, daß die veränderten Drehzahlen mindestens 10 ms bis 50 s, vorzugsweise 50 ms bis 30 s, insbesondere 3 s bis 20 s, gehalten werden, und daß gegebenenfalls die Zeitspanne des Betriebes mit Nenndrehzahl mindestens gleich groß, vorzugsweise größer als die Zeitspanne des Betriebes mit veränderter Drehzahl ist. Eine vorteilhafte, ökonomische Arbeitsweise ergibt sich, wenn erfindungsgemäß auch, oder zusätzlich, im Bereich unterhalb des oberen Sollwertes und/oder oberhalb des unteren Sollwertes der Rotorbelastung die veränderten Drehzahlen mindestens 10 Millisekunden vorzugsweise mindestens 3 Sekunden gehalten werden und wenn die Zeitspanne des Betriebes mit Nenndrehzahl gleich groß, vorzugsweise größer als die Zeitspanne des Betriebes mit veränderter Drehzahl ist.

Besonders vorteilhaft ist die Zusammenfassung der Soll-Istwertregelung der Rotorbelastung mit der Regelung des zeitlichen Ablaufes in einem gemeinsamen Steuergerät. Erfindungsgemäß wird vorgeschlagen, für den Vergleich von Sollwert und Istwert der Rotorbelastung und die zeitliche Abfolge der gegebenenfalls daraus resultierenden durchzuführenden Drehzahländerungen eine elektronische Regelung, insbesondere eine mit programmierbaren Mikroprozessoren ausgestattete Regelung zu verwenden. Weiters ist es empfehlenswert, daß die Zuförderung des Ausgangsmaterials in die Anlage den jeweiligen Arbeitsbedingungen mittels einer geeigneten Regelung angepaßt wird. Besonders bei der Drehzahlreduktion des Rotors auf den Wert Null ist es vorteilhaft, wenigstens für einen Bruchteil der Dauer des Rotorstillstandes die Zuförderung in die Anlage zu unterbrechen, damit die Aufbringung und Abtragung des Ausgangsmaterials auf bzw. von der beheizten Anlagenwand, die nur bei umlaufenden Rotor gewährleistet ist, nicht gestört wird. Gleichfalls ist es empfehlenswert, bei der Reduktion der Rotordrehzahl auf kleinere Werte die Menge der Materialzuführung abhängig vom Ausmaß der Drehzahldrosselung und der Beschaffenheit des Ausgangsmaterials auf 10% bis 70%, vorzugsweise auf 50%, der Nennfördermenge zu drosseln und die Zuförderung erst nach Erreichen eines unteren Belastungssollwertes der Rotorbelastung auf 100% der Nennfördermenge wieder einzuschalten. Zusätzlich ist es empfehlenswert, wenn die Reduktion der Rotordrehzahl zeitverzögert nach der Drosselung der Zufördermenge durchgeführt wird.

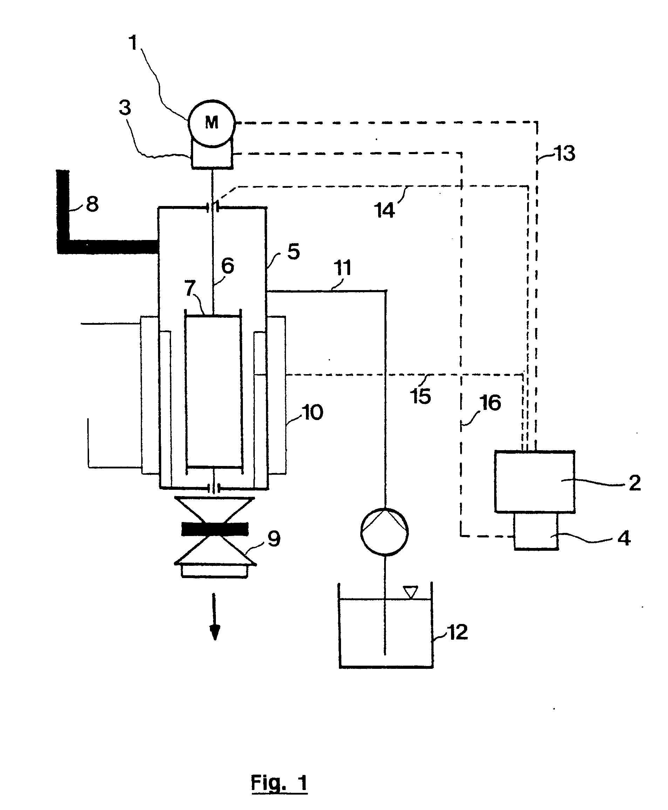

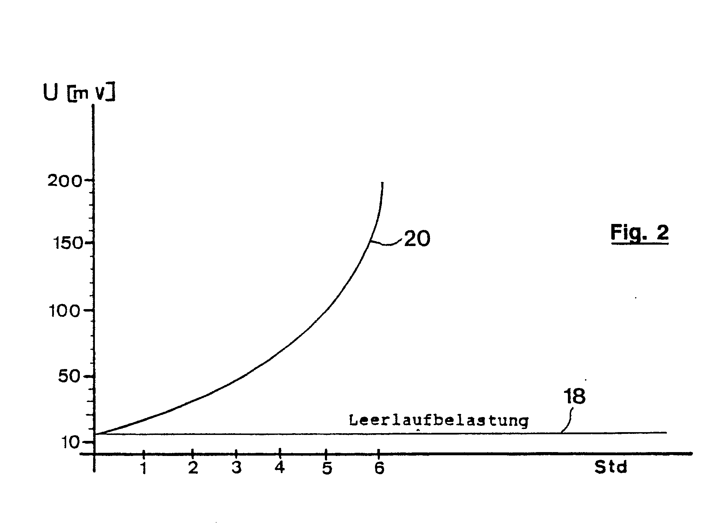

Anhand der Zeichnung wird die Erfindung näher erläutert. Es Zeigen: Fig.1 ein Prinzipschema zur Drehzahlveränderung des Rotors und Fig. 2 bis 5 verschiedene Rotordrehzahlverläufe.

Gemäß Fig. 1 umfaßt ein Dünnschichttrockner 5 eine Rotorwelle 6, die Abstreifelemente 7 trägt, die beweglich gegenüber der Rotorwelle 6 sind. Über eine Zufuhrleitung 11 wird das zu trocknende Material aus einem Behälter 12 zugeführt; über eine Austragvorrichtung 9, z.B. eine Schleuse, wird das Material ausgetragen; über eine Leitung 8 werden Dampf und/oder gasförmige Zersetzungsprodukte abgeführt. Der Mantel des Dünnschichttrockners 5 ist mit einer Heizeinrichtung 10 umgeben. Die Rotorwelle 6 wird von einem Rotorwellenantrieb bzw. Motor 1 angetrieben, dessen Drehzahl von einer Schalt- bzw. Regeleinheit 3 eingeregelt wird. Die Regeleinheit 3 wird von einer Meßeinrichtung 2 über eine Zeitschalteinrichtung 4 angesteuert (Steuerleitung 16) und erhält Signale entsprechend der gemessenen Anlagenparameter, um bei Überschreitung eines vorgegebenen Sollwertes eine Drehzahländerung einzuleiten. Es können z.B. als Anlagenparameter die Rotorbelastung (Meßleitung 13), die Schichtdicke der Ablagerungen im Gehäuse (Meßleitung 15), die Lagerbelastung der Rotorwelle 6 (Meßleitung 14) herangezogen werden, die von geeigneten Sensoren gemessen werden.

Im folgenden wird die Erfindung anhand von Beispielen näher erläutert.

Beispiel 1:

Ein Dünnschichtverdampfer 5 mit einem Rotordurchmesser von 200 mm und mit elastisch federnd montierten Abstreifelementen ausgestattet, wurde für die Trocknung eines wässrigen Verdampferkonzentrates, enthaltend 200 g/Liter Natriumsulfat und 50g/Liter - 150 g/Liter Eisen(III)-hydroxid, verwendet. Die Temperatur im Heizmantel des Verdampfers betrug 185°C, das Betriebsvakuum 170 mbar absolut. Der Rotor wurde mit 1100U/min durch einen Drehstrommotor von 6 Kilowatt Leistung über Keilriemen angetrieben und das Verdampferkonzentrat mit einer Durchflußrate von 38 Liter pro Stunde in den Verdampfer eingespeist. Die Belastung des Rotors wurde mit einem mit der Rotorwelle verbundenen Drehmomentaufnehmer erfaßt und das Ausgangssignal nach Linearisierung durch einen Meßwertwandler als mit der Belastung korrelierendes Millivoltsignal dargestellt. In Fig. 2 ist der Verlauf der Rotorbelastungskurve 20 ersichtlich. Die senkrechte Achse zeigt die Rotorbelastung, die waagrechte Achse den Zeitverlauf in Stunden an. Der Versuch mußte nach 6 Stunden abgebrochen werden, weil die Rotorbelastung die Leistungsgrenze des Antriebsmotors erreicht hatte.

Mit 18 ist der Verlauf der Leerlaufbelastung dargestellt.

Beispiel 2:

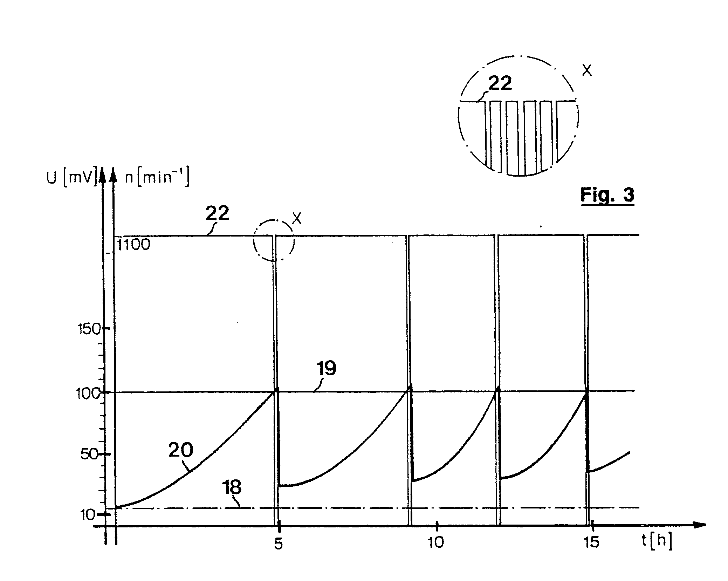

Der Versuch aus Beispiel 1 wurde unter Verwendung einer erfindungsgemäßen belastungskonformen Rotorsteuerung wiederholt. An einem elektronischen Regler für Millivolteingang wurde ein oberer Sollwert für die Rotorbelastung als Anlagenparameter eingestellt. Mit dem Ausgangssignal des Reglers wurde ein elektromechanisches Zeitschaltwerk und über dieses ein Schutz zum Ein- und Ausschalten des Antriebsmotors angesteuert. Das Zeitschaltwerk wurde so eingestellt, daß bei Überschreiten des oberen Sollwertes der Rotorbelastung der Antriebsmotor für eine Zeitspanne von 500 Millisekunden ausgeschaltet und danach wieder eingeschaltet wurde. Nach einer Zeitspanne von 10 Sekunden wurde der Vorgang, falls der Istwert noch über dem Sollwert lag, wiederholt. Diese Schaltvorgänge wurden so lange wiederholt bis der obere Sollwert unterschritten war, sodann wurde mit der Nenndrehzahl weitergearbeitet. Der Verlauf der Rotorbelastungskurve 20 und der Schaltvorgänge ist aus Fig.3 ersichtlich, wobei auf der ersten senkrechten Achse der obere Sollwert der Belastung und auf der zweiten senkrechten Achse die Drehzahl und auf der waagrechten Achse die Zeit aufgetragen sind. Weiters sind die Rotorbelastung im Leerlauf mit 18, der vorgegebene obere Sollwert der Rotorbelastung mit 19 und der Drehzahlverlauf mit 22 bezeichnet. Der Versuch wurde nach 15 Stunden abgebrochen, da keine bleibende Überschreitung des Sollwertes aufgetreten war. Bei Überschreitung des oberen Sollwertes waren durchschnittlich 2 bis 5 Schaltvorgänge notwendig, bis der Sollwert wieder unterschritten war, was in den vergrößert herausgehobenen Diagrammdetails X verdeutlicht ist.

Beispiel 3:

Ein Dünnschichtverdampfer mit einem Rotordurchmesser von 250 mm und mit schwenkbar montierten Abstreifelementen versehen, wurde für die Trocknung einer wässrigen Tonaufschlämmung mit einem Feststoffgehalt von 330 g/Liter verwendet. Die Temperatur im Heizmantel des Verdampfers beträg 195°C, das Betriebsvakuum 130 mbar absolut. Der Rotor wurde mit 930 U/min durch einen polumschaltbaren Drehstrommotor von 8 Kilowatt Leistung über Zahnriemen angetrieben und die Tonaufschlämmung mit einer Durchflußrate von 50 Liter pro Stunde in den Verdampfer eingespeist. Für die Messung der Belastung des Rotors wurde der mit der Belastung korrelierende Stromfluß im Antriebsmotor herangezogen, mittels Stromwandler gemessen und in Ampere angezeigt. Der Leerlaufstrom betrug 3,8 Ampere. Der Versuchsverlauf war ähnlich wie in Beispiel 1 und Fig. 2 dargestellt. Der Versuch wurde nach 4,5 Stunden abgebrochen, da der Motorschutzschalter des Antriebsmotors, der auf einen Wert von 12 Ampere eingestellt war, auslöste.

Beispiel 4:

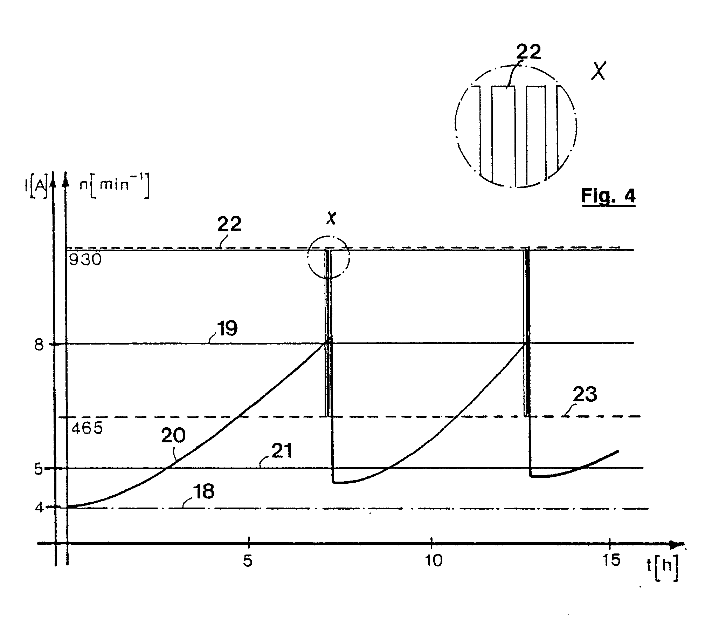

Der Versuch aus Beispiel 3 wurde unter Verwendung einer erfindungsgemäßen belastungskonformen Rotorsteuerung wiederholt. Der Antriebsmotor wurde mit einer Polumschaltvorrichtung in Dahlanderschaltung versehen, so daß auch ein Betrieb mit halber Drehzahl möglich war. Für die belastungskonforme Rotorsteuerung wurde eine Kombination von Wirkstromwandlern mit Über- und Untersollwertkontakten, Relais und Zeitrelais verwendet. Es wurde ein oberer Sollwert von 8 Ampere und ein unterer Sollwert von 5 Ampere vorgegeben. Die Zeitrelais wurden so eingestellt, daß bei Überschreiten des oberen Sollwertes der Rotorbelastung der Antriebsmotor für eine Zeitspanne von 5 Sekunden auf halbe Drehzahl und sodann wieder auf volle Drehzahl geschaltet wurde. Nach weiteren 10 Sekunden wurde der Vorgang, falls der Istwert der Rotorbelastung noch über dem unteren Sollwert gelegen war, wiederholt. Diese Schaltvorgänge wurden so lange wiederholt, bis der untere Sollwert unterschritten war und sodann wieder auf Nenndrehzahl geschaltet. Der Verlauf der Rotorbelastungskurve 20 und der Schaltvorgänge ist aus Fig. 4 ersichtlich. Die erste senkrechte Achse zeigt die Rotorbelastung, die zweite senkrechte Achse die Drehzahl, die waagrechte Achse den Zeitverlauf an. Weiters sind dargestellt, die Rotorbelastung im Leerlauf mit 18, der vorgebene obere Sollwert der Rotorbelastung mit 19, der untere Sollwert der Rotorbelastung mit 21 und die Drehzahlverlauf mit 22. Mit 23 ist die Drehzahl angegeben, auf die die drehzahl abgesenkt wurde. Der Versuch wurde nach 15 Stunden abgebrochen, da keine bleibende Überschreitung des oberen Sollwertes 19 aufgetreten war. Bei Überschreitung des oberen Sollwertes waren durchschnittlich 3-5 Schaltvorgänge notwendig bis der untere Sollwert 21 unterschritten war. Diese Schaltvorgänge bei Erreichen des oberen Sollwertes 19 sind in dem vergrößert dargestellten Detail "X" ersichtlich.

Beispiel 5:

Ein Dünnschichtverdampfer, mit einem Rotordurchmesser von 150 mm und auf dem Rotor mit pendelnd aufgehängten beweglichen Abstreifelementen ausgestattet, wurde für die Trocknung eines Verdampferkonzentrates, enthaltend 220 g/Liter Natriummetaborat und 60g/Liter Eisen(III)hydroxid, verwendet. Die Temperatur im Heizmantel des Verdampfers betrug 190°C, das Betriebsvakuum 180 mbar absolut. Der Rotor wurde mit 1350 U/min durch einen Schrittmotor von 2kW Leistung über Rollenketten angetrieben und das Verdampferkonzentrat mit einer Durchflußrate von 23 Liter pro Stunde in den Verdampfer eingespeist. Für die Belastung des Rotors wurde der mit der Belastung korrelierende Stromfluß im Antriebsmotor herangezogen, mittels Stromwandler gemessen und in Ampere dargestellt. Der Leerlaufstrom betrug 2,9 Ampere. Der Versuchsverlauf war ähnlich wie in den Beispielen 1 und 3 sowie in Fig. 2 dargestellt. Der Versuch wurde nach 60 Minuten abgebrochen, da der Motorschutzschalter des Antriebsmotors, der auf einen Wert von 8 Ampere eingestellt war, auslöste.

Beispiel 6:

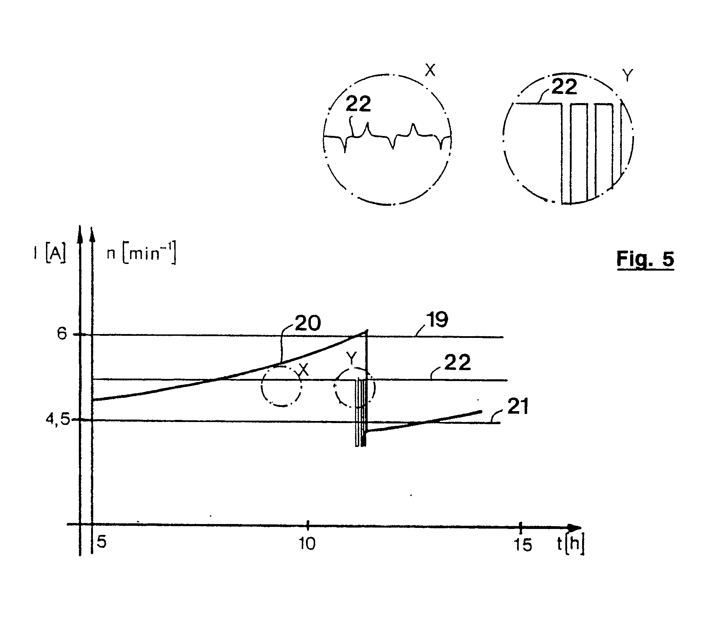

Der Versuch aus Beispiel 5 wurde unter Verwendung einer erfindungsgemäßen, wiederum belastungskonformen Rotorsteuerung wiederholt. Für die belastungskonforme Rotorsteuerung wurde eine programmierbare, mit Mikroprozessoren ausgestattete elektronische Regelung verwendet. Es wurde ein oberer Sollwert von 6 Ampere und ein unterer Sollwert von 4,5 Ampere vorgegeben. Die zeitliche Steuerung wurde so programmiert, daß im Arbeitsbereich zwischen oberem und unterem Sollwert alle 3 Minuten die Drehzahl für eine Zeitspanne von 100 Millisekunden auf 1050 U/min abgesenkt und sodann für eine Zeitspanne von 50 Millisekunden auf 1400 U/min erhöht und sodann wieder auf Nenndrehzahl geschaltet wurde. Bei Überschreitung des oberen Sollwertes der Rotorbelastung wurde die Drehzahl des Rotors für eine Zeitspanne von 3 Sekunden auf 700 U/min abgesenkt und sodann wieder auf volle Drehzahl geschaltet. Nach weiteren 6 Sekunden wurde der Vorgang, da der Istwert der Rotorbelastung noch über dem unteren Sollwert gelegen war, wiederholt (siehe Detail X in Fig.5). Diese Schaltvorgänge wurden so lange wiederholt, bis der untere Sollwert unterschritten war, und sodann wieder auf Nenndrehzahl geschaltet. Während dieser Schaltvorgänge blieb die vorher genannte zeitliche Steuerung ausgeschaltet. Diese zeitliche Steuerung trat erst wieder mit der Überschreitung des unteren Sollwertes in Funktion. Der Verlauf der Rotorbelastungskurve ist aus Fig.5 ersichtlich. Die erste senkrechte Achse des Diagramms zeigt die Rotorbelastung, die zweite senkrechte Achse die Drehzahl. Die waagrechte Achse gibt den Zeitverlauf an. Die Kurvenzüge 19 und 21 begrenzen den oberen bzw. den unteren Sollwert der Rotorbelastung. Den Drehzahlverlauf des Rotors präsentiert der Kurvenverlauf 22, die Rotorbelastung die Kurve 20. Nach 15 Stunden wurde der Versuch abgebrochen, weil es zu keiner weiteren störenden Überschreitung des oberen Sollwertes im Arbeitsverlauf kam. Detail X in Fig.5 zeigt die zeitliche Steuerung; Detail Y die Steuerung bei Überschreiten des oberen Sollwertes.

Zu bemerken ist, daß die dargestellten Diagramme im wesentlichen auch die Abhängigkeit der Drehzahländerungen von anderen Anlagenparametern, z.B. der Schichtdicke an den Gehäuseinnenwänden, der Lagerbelastung, usw., wiedergeben, wenn diese für eine Regelung vorgesehen werden. Die im wesentlichen gleichen Schalt- und Regeleinrichtungen können auch für andere Anlagenparameter eingesetzt werden.

Zu bemerken ist, daß auch vor Erreichen eines oberen Sollwertes Drehzahländerungen in beliebiger Richtung vorgenommen werden können, sodaß die Erreichung eines oberen Sollwertes eines Anlagenparameters hinausgezögert wird oder dieser bei entsprechender Häufigkeit der Drehzahlänzahländerungen, die z.B. in vorgegebenen Zeitintervallen regelmäßig erfolgen können, gar nicht erreicht wird. Durch die Änderungen der Rotordrehzahl ergibt sich der überraschende Effekt, daß die Ausbildung von Ablagerungen an den Rotoroberflächen bzw. Abstreifelementen verhindert bzw. beseitigt werden kann. Die Änderungen der Drehzahlen erfolgen entweder in Abhängigkeit von dem Ausmaß der Ablagerungen oder in Abhängigkeit von empirisch erfaßten Werten in vorgegebenen Zeitspannen. Das Kriterium für eine Änderung der Drehzahlen ist also durch verschiedene abgefühlte Verfahrensparamter oder aber empirisch festgestellte Ausmaße der Ablagerungen am Rotor bzw. den Abstreifelementen gegeben.

Die Erfindung betrifft auch eine Dünnschichtbehandlungsanlage mit einer erfindungsgemäßen Rotorsteuerung mit der das erfindungsgemäße Verfahren durchgeführt werden kann. Eine derartige mit einer erfindungsgemäßen Rotorsteuerung versehene Dünnschichtbehandlungsanlage eignet sich beispielsweise hervorragend für die Lebensmittelindustrie zur Herstellung von festen Lebensmitteln aus Konzentraten wie etwa Suppenpulver und dgl., aber auch für die pharmazeutische Industrie zur Gewinnung von schwierig zu entwässernden Arzneimitteln. Die so erhaltenen Produkte sind homogener bzw. gleichmäßiger in der Qualität. Ein entscheidender weiterer Vorteil sind die beträchtlich erhöhten Serviceintervalle, die eine besonders ökonomische und störungsfreie Arbeitsweise ergeben. Durch die genannten Vorteile ist eine derartige mit einer erfindungsgemäßen Rotorsteuerung versehene Dünnschichtbehandlungsanlage hervorragend für die chemische Industrie und die Keramikindustrie geeignet, da sich auch schwierige, weil zu Verkrustung oder Verglasung neigende Schlämme oder Suspensionen einwandfrei verarbeiten bzw. trocknen lassen. So lassen sich beispielsweise aus Mercerisierungsablaugen oder aus borathältigen Abwasserkonzentraten oder aus Galvanikschlämmen, trockene Pulver gewinnen. Aus Tonaufschlämmungen lassen sich sinterfreudige Pulver für die Herstellung von Industriekeramik nach dem Trockenpreßverfahren gewinnen.

**Patentansprüche**

1. Verfahren zur Steuerung der Rotordrehzahl für Dünnschichtbehandlungsanlagen, mit beweglichen, gelenkig auf dem Rotor gelagerten oder elastisch ausgebildeten Abstreifelementen, dadurch gekennzeichnet, daß zur Vermeidung bzw. Entfernung von Produktablagerungen an den Rotor- bzw. Abstreifelementoberflächen bzw. an den von den Abstreifelementen überstrichenen Innenwänden der Dünnschichtbehandlungsanlage während des Betriebes die Drehzahl des Rotors verändert wird, und daß danach, gegebenenfalls nach einer vorbestimmten Zeitspanne, der Rotor wiederum auf die vorgewählte Nenndrehzahl oder eine andere vorgegebene Drehzahl gebracht wird, wobei entweder die ein Maß für die Ausbildung von Ablagerungen in der Anlage, insbesondere auf dem Rotor bzw. der Innenwand darstellenden Anlagenparameter registriert werden und in Abhängigkeit der registrierten Werte der Anlageparameter die Drehzahl des Rotors verändert wird, oder die Drehzahl des Rotors in vorgegebenen Zeitintervallen verändert wird.

2. Verfahren nach Anspruch 1, dadurch gekennzeichnet, daß die Änderungen der Drehzahl des Rotors abrupt erfolgen.

3. Verfahren nach Anspruch 1 oder 2, dadurch gekennzeichnet, daß die Änderungen der Drehzahl durch Erhöhen oder Verringern der Drehzahl oder Anhalten des Rotors erfolgen.

4. Verfahren nach einem der Ansprüche 1 bis 3, dadurch gekennzeichnet, daß als Anlagenparameter zur Feststellung der Ablagerungen in der Anlage die Belastung des Rotors die Schichtdicke auf der Innenwand, der Lagerdruck od.dgl. registriert werden.

5. Verfahren nach einem der Ansprüche 1 bis 3, dadurch gekennzeichnet, daß die Veränderungen der Drehzahl in regelmäßigen aufeinanderfolgenden Intervallen erfolgt.

6. Verfahren nach einem der Ansprüche 1 bis 5, dadurch gekennzeichnet, daß durch Erhöhung oder Verringerung der Drehzahl des Rotors die Werte der registrierten Anlagenparameter innerhalb vorgegebener Sollwerte gehalten werden.

7. Verfahren nach Anspruch 6, dadurch gekennzeichnet, daß bei Überschreitung eines vorgewählten oberen Sollwertes der Rotorbelastung oder eines anderen Anlagenparameters die Drehzahländerungen so oft wiederholt werden, bis der obere Sollwert wieder unterschritten ist, und daß sodann der Rotor wieder auf Nenndrehzahl gebracht wird.

8. Verfahren nach Anspruch 6, dadurch gekennzeichnet, daß die Drehzahländerungen so oft durchgeführt werden, bis ein vorgewählter unterer Sollwert der Rotorbelastung bzw. eines Anlagenparameters unterschritten wird und daß sodann der Rotor wieder auf Nenndrehzahl geschaltet wird.

9. Verfahren nach einem der Ansprüche 6 bis 8, dadurch gekennzeichnet, daß die Drehzahländerungen im Bereich unterhalb des oberen Sollwertes oder oberhalb des unteren Sollwertes der Rotorbelastung bzw. eines Anlagenparameters in vorgewählten, gegebenenfalls konstanten zeitlichen Abständen durchgeführt werden.

10. Verfahren nach einem der Ansprüche 6 bis 9, dadurch gekennzeichnet, daß die Drehzahländerungen durch Ausschalten und Einschalten des Rotorwellenantriebes, durch Änderung der Betriebsparameter eines für den Rotorantrieb vorgesehenen Motors, im Falle eines Elektromotors der Spannung oder der Frequenz, durch elektrische Umschaltung eines polumschaltbaren für den Betrieb mit mindestens zwei Drehzahlen eingerichteten Elektromotors als Rotorwellenantrieb, durch Ansteuerung eines impulsgesteuerten frequenzabhängigen Schrittmotors in den Betriebsarten Konstantstrom oder Konstantspannung, durch elektronische Ansteuerung des thyristorgeregelten Gleichstrommotors für den Rotorantrieb, durch Betätigung eines Getriebes, durch Betätigung einer die Rotorwelle mit dem Antriebsmotor verbindenden Kupplung oder durch Betätigen einer, direkt oder indirekt über Kraftübertragungsorgane wie Keilriemen, Zahnräder, od.dgl., auf die Rotorwelle wirkenden, Wirbelstrombremse, wobei gegebenenfalls der Rotorwellenantrieb vorher oder gleichzeitig abgeschaltet wird, herbeigeführt werden.

11. Verfahren nach einem der Ansprüche 6 bis 10, dadurch gekennzeichnet, daß Drehzahlverringerungen um 2 bis 80%, vorzugsweise um 3 bis 60%, insbesondere um 10 bis 50% und Drehzahlerhöhungen um 1 bis 50%, vorzugsweise 1 bis 40%, insbesondere 10 bis 30%, erfolgen.

12. Verfahren nach einem der Ansprüche 6 bis 11, dadurch gekennzeichnet, daß die Veränderungen der Drehzahl für den Betrieb im Bereich unterhalb des oberen Sollwertes oder oberhalb des unteren Sollwertes der Rotorbelastung bzw. eines Anlagenparameters 1 bis 30 %, vorzugsweise 1 bis 20%, der Nenndrehzahl betragen.

13. Verfahren nach einem der Ansprüche 6 bis 12, dadurch gekennzeichnet, daß die veränderten Drehzahlen mindestens 10 ms bis 50s, vorzugsweise 50 ms bis 30 s, insbesondere 3 bis 20 s, gehalten werden.

14. Verfahren nach einem der Ansprüche 6 bis 13, dadurch gekennzeichnet, daß die Zeitspanne des Betriebes mit Nenndrehzahl mindestens gleich groß, vorzugsweise größer ist, als die Zeitspanne des Betriebes mit veränderter Drehzahl.

15. Verfahren nach einem der Ansprüche 6 bis 14, dadurch gekennzeichnet, daß die Zuförderung des Ausgangsmaterials in die Anlage in Abhängigkeit von der Rotordrehzahl gesteuert ist oder daß die Zuförderung des Ausgangsmaterials bei einer Drehzahlreduktion des Rotors auf den Wert Null wenigstens für einen Bruchteil der Dauer des Rotorstillstandes unterbrochen wird.

16. Verfahren nach einem der Ansprüche 6 bis 14, dadurch gekennzeichnet, daß bei Erreichen des oberen Sollwertes der Belastung oder eines Anlagenparameters des Rotors die Zuförderung des Ausgangsmaterials auf 10% bis 70%, vorzugsweise auf 50%, der Nennfördermenge gedrosselt wird und bei Erreichen des unteren Sollwertes die Förderung wieder auf 100% der Nennfördermenge geschaltet wird.

17. Verfahren nach einem der Ansprüche 6 bis 14 und 16, dadurch gekennzeichnet, daß nach einer Reduktion der Nennfördermenge des Ausgangsmaterials die Reduktion der Drehzahl des Rotors zeitverzögert vorgenommen wird.

18. Verfahren nach einem der Ansprüche 1 bis 17, dadurch gekennzeichnet, daß die vorgewählte Drehzahl des Rotors mehrmals unmittelbar aufeinanderfolgend verringert und/oder erhöht wird.

19. Verfahren nach einem der Ansprüche 6 bis 18, dadurch gekennzeichnet, daß die Zeitdauer für das Erreichen der verringerten oder erhöhten Drehzahl 1 ms bis 3 s, vorzugsweise 10 ms bis 1 s, insbesondere etwa 500 ms beträgt.

20. Rotorsteuerung für einen Abstreifelemente tragenden Rotor einer Dünnschichtbehandlungsanlage, bei der die Abstreifelemente am Rotor beweglich gelagert bzw. elastisch ausgebildet sind, zur Durchführung des Verfahrens nach einem der Ansprüche 1 bis 19, dadurch gekennzeichnet, daß zur Vermeidung bzw. Entfernung von Produktablagerungen am Rotor und/oder an den Abstreifelementen der Rotorantrieb zur Veränderung der Drehzahl des Rotors während des Betriebes ausgelegt ist, und daß zur Einleitung der Drehzahländerungen entweder mindestens eine Vorrichtung zur Messung eines ein Maß für die Ablagerungen darstellenden Anlagenparameters vorgesehen ist, deren Signale mindestens einer Schalteinheit zur Änderung der Drehzahl des Rotors zugeführt sind, oder eine Schalteinheit vorgesehen ist, mit der in vorgegebenen Zeitintervallen eine Drehzahländerung durchführbar ist.

21. Rotorsteuerung nach Anspruch 20, dadurch gekennzeichnet, daß der Rotorantrieb zur abrupten Erhöhung oder abrupten Verringerung der Drehzahl des Rotors ausgelegt ist.

22. Rotorsteuerung nach Anspruch 20 oder 21, dadurch gekennzeichnet, daß zumindest eine Zeitschaltvorrichtung zur Begrenzung der Dauer des Betriebes mit veränderter Drehzahl vorgesehen ist.

23. Rotorsteuerung nach einem der Ansprüche 20 bis 22, dadurch gekennzeichnet, daß die Belastung des Rotors gemessen wird, wobei der Istwert der Belastung einem Vergleicher zum Vergleich mit einem vorgegebenen Sollwert zugeführt ist, und daß in Abhängigkeit vom Vergleich bzw. Ausgangssignal des Vergleichers die Drehzahl mit einem vom Vergleicher gesteuerten Schaltorgan veränderbar ist.

24. Rotorsteuerung nach Anspruch 23, dadurch gekennzeichnet, daß zur Messung der Belastung des Rotors ein Drehmomentaufnehmer vorgesehen ist.

25. Rotorsteuerung nach Anspruch 23, dadurch gekennzeichnet, daß bei einem elektrischen Rotorantrieb zur Messung des der Belastung des Rotors entsprechenden Stromflusses ein Wirkstromwandler vorgesehen ist.

26. Rotorsteuerung nach Anspruch 23, dadurch gekennzeichnet, daß im Falle einer indirekten Kraftübertragung mittels Keilriemen, Zahnrädern, Ketten, Zahnriemen, od.dgl., zur Messung des der Belastung entsprechenden, senkrecht zur Rotorachse wirkenden mechanischen Drucks ein Kraftaufnehmer vorgesehen ist.

27. Rotorsteuerung nach einem der Ansprüche 20 bis 25, dadurch gekennzeichnet, daß zum Vergleich der gemessenen Belastungs-Istwerte mit vorgegebenen Belastungs-Sollwerten eine elektronische Reglereinrichtung vorgesehen ist, mit deren Ausgangssignal ein Schaltorgan zur Herbeiführung einer Drehzahländerung betätigbar ist.

28. Rotorsteuerung nach Anspruch 27, dadurch gekennzeichnet, daß eine mit programmierbaren Mikroprozessoren ausgetattete Regeleinrichtung, vorgesehen ist.

## Claims

1. A process for controlling the number of revolutions per minute of a rotor for thin-film treatment installations, having mobile stripping elements articulatedly supported on the rotor or elastically formed, characterized in that for preventing or removing product deposits on the rotor surfaces or stripping element surfaces or on the interior walls of the thin-film treatment installation swept by the stripping elements, the number of revolutions per minute of the rotor is changed during operation and that after that, optionally after a predetermined period, the rotor is returned to the preselected rated speed or another predetermined number of revolutions per minute,with either the installation parameters constituting a measure for the formation of deposits in the installation, in particular on the rotor or on the interior wall, being recorded and the number of revolutions per minute of the rotor being changed as a function of the recorded values of the installation parameters or the number of revolutions per minute of the rotor being changed in predetermined intervals of time.

2. The process according to claim 1, wherein the changes of the numbers of revolutions per minute of the rotor are effected abruptly.

3. The process according to claim 1 or 2, wherein the changes of the numbers of revolutions per minute are effected by increasing or decreasing the number of revolutions per minute of the rotor or stopping of the rotor.

4. The process according to any one of the claims 1 to 3, wherein the load of the rotor, the thickness of the layer on the interior wall, the bearing pressure or the like are recorded as the installation parameters for determining the deposits in the installation.

5. The process according to any one of the claims 1 to 3, wherein the changes of the numbers of revolutions per minute are effected in regular successive intervals.

6. The process according to any one of the claims 1 to 5, wherein for increasing or decreasing the number of revolutions per minute of the rotor, the values of the recorded installation parameters are kept within predetermined set values.

7. The process according to claim 6, wherein on exceeding a preselected upper set value of the rotor load or of another installation parameter, the changes of numbers of revolutions per minute are repeated until the upper set value is fallen short of again and the rotor is then returned to rated speed.

8. The process according to claim 6, wherein the changes of the numbers of revolutions per minute are repeated until a preselected lower set value of the rotor load or of an installation parameter is fallen short of and the rotor is then switched to rated speed again.

9. The process according to any one of the claims 6 to 8, wherein the changes of the numbers of revolutions per minute in the range below the upper set value or above the lower set value of the rotor load or of an installation parameter are effected in preselected, optionally constant intervals of time.

10. The process according to any one of the claims 6 to 9, wherein the changes of numbers of revolutions per minute are effected by switching the rotor shaft drive on and off, by changing the operating parameters of an engine provided for driving the rotor, in case of an electric motor of the voltage or the frequency, by electrical switching of a pole-changing (multiple speed) motor adapted for the operation at at least two rated speeds as a rotor shaft drive, by triggering a pulse-controlled, frequency-depending stepping motor in the operating modes of constant voltage or constant current, by electronic triggering of the thyristor-controlled direct current motor for the rotor drive, by actuation of a gear, by actuation of a clutch connecting the rotor shaft with the drive motor or by actuation of an eddy current brake directly or indirectly acting on the rotor shaft via power transmission organs such as V-belts, gearwheels or the like, the rotor shaft drive optionally being switched off previously or simultaneously.

11. The process according to any one of the claims 6 to 10, wherein reductions in the number of revolutions per minute of from 2 to 80 percent, preferably of from 3 to 60 percent, in particular of from 10 to 50 percent and increases in the number of revolutions per minute of from 1 to 50 percent, preferably of from 1 to 40 percent, in particular of from 10 to 30 percent, are effected.

12. The process according to any one of the claims 6 to 11, wherein the changes in the numbers of revolutions per minute for the operation in the range below the upper set value or above the lower set value of the rotor load or of an installation parameter amount to 1 to 30 percent, preferably 1 to 20 percent, of the rated speed.

13. The process according to any one of the claims 6 to 12, wherein the changed numbers of revolutions per minute are held for at least 10 milliseconds to 50 seconds, preferably 50 milliseconds to 30 seconds, in particular 3 to 20 seconds.

14. The process according to any one of the claims 6 to 13, wherein the period of time of the operation at rated speed is at least equal to, preferably greater than the period of time of the operation at changed number of revolutions per minute.

15. The process according to any one of the claims 6 to 14, wherein the feeding of the starting material to the installation is controlled as a function of the number of revolutions per minute of the rotor or the feeding of the starting material at a reduction of the number of revolutions per minute of the rotor to the value of zero is interrupted at least for a fraction of the duration of the inactivation of the rotor.

16. The process according to any one of the claims 6 to 14, wherein on reaching the upper set value of the load of the rotor or of an installation parameter, the feeding of the starting material is reduced to from 10 to 70 percent, preferably to 50 percent, of the rated output and on reaching the lower set value, the output is switched to 100 percent of the rated output again.

17. The process according to any one of the claims 6 to 14 and 16, wherein subsequent to a reduction of the rated output of the starting material, the reduction of the number of revolutions per minute of the rotor is effected time-retarded.

18. The process according to any one of the claims 1 to 17, wherein the preselected number of revolutions per minute of the rotor is repeatedly reduced and/or increased in immediate succession.

19. The process according to any one of the claims 6 to 18, wherein the period of time required for reaching the reduced or increased number of revolutions per minute amounts to 1 millisecond to 3 seconds, preferably 10 milliseconds to 1 second, in particular approximately 500 milliseconds.

20. A rotor control for a rotor carrying stripper elements of a thin-film treatment installation in which the stripper elements are movably supported on the rotor or elastically formed, for carrying out the process according to any one of the claims 1 to 19, characterized in that for preventing and/or removing product deposits on the rotor and/or on the stripper elements, the rotor drive is adapted for changing the number of revolutions per minute of the rotor during operation and that for initiating the changes of the numbers of revolutions per minute, at least one apparatus for measuring an installation parameter constituting a measure for the deposits and whose signals are transmitted to at least one switching unit for changing the number of revolutions per minute of the rotor is provided, or that a switching unit by means of which a change of the number of revolutions per minute can be effected in predetermined intervals of time is provided.

21. The rotor control according to claim 20, wherein the rotor drive is adapted for the abrupt increase or abrupt decrease of the number of revolutions per minute of the rotor.

22. The rotor control according to claim 20 or 21, wherein at least one time switching device for limiting the duration of the operation at changed number of revolutions per minute is provided.

23. The rotor control according to any one of the claims 20 to 22, wherein the load of the rotor is measured and the actual value of the load is fed to a comparator for comparison with a predetermined set value and the number of revolutions per minute is changeable by means of a switching organ controlled by the comparator as a function of the comparison or of an output signal of the comparator.

24. The rotor control according to claim 23, wherein a torque transducer is provided for measuring the load of the rotor.

25. The rotor control according to claim 23, wherein in the case of an electric rotor drive, an active current transducer is provided for measuring the current flow corresponding to the load of the rotor.

26. The rotor control according to claim 23, wherein in the case of an indirect power transmission by means of V-belts, gearwheels, chains, toothed belts or the like, a force transducer is provided for measuring the mechanical pressure acting perpendicularly to the rotor axis and corresponding to the load.

27. The rotor control according to any one of the claims 20 to 25, wherein for comparing the measured actual values of the load to the predetermined set values of the load, an electronic control means by whose output signal a switching organ for effecting a change of the number of revolutions per minute is actuable, is provided.

28. The rotor control according to claim 27, wherein a control means equipped with programmed microprocessors is provided.

**Revendications**

1. Procédé de commande d'un rotor pour les installations de traitement en couche mince, avec éléments d'essuyage articulés sur le rotor ou de construction élastique, caractérisé en ce que, pour éviter la formation de dépôts et/ou supprimer ceux qui se seraient formés à la surface du rotor et/ou sur les éléments d'essuyage et/ou sur les parois de l'installation de traitement en couche mince balayées par les éléments d'essuyage, la vitesse du rotor est modifiée en cours de fonctionnement, le rotor recommençant ensuite à tourner, le cas échéant au bout d'un intervalle prédéfini, à la vitesse nominale présélectionnée ou à une autre vitesse prédéterminée, soit que les paramètres de l'installation permettant d'évaluer l'importance des dépôts qui se sont formés dans l'installation et plus particulièrement sur le rotor ou sur les parois soient enregistrés et que la vitesse du rotor soit modifiée en fonction des valeurs enregistrées pour les paramètres de l'installation, soit que la vitesse du rotor soit modifiée à intervalles prédéfinis.

2. Procédé selon la revendication 1, caractérisé en ce que la modification de la vitesse du rotor intevient brusquement.

3. Procédé selon une des revendications 1 ou 2, caractérisé en ce que la modification de la vitesse se fait sous forme d'augmentation ou de réduction de la vitesse ou d'arrêt du rotor.

4. Procédé selon une des revendications 1 à 3, caractérisé en ce que, pour évaluer l'importance des dépôts dans l'installation, on utilise comme paramètres la sollicitation du rotor, l'épaisseur de la couche déposée sur la paroi interne, la pression s'exerçant sur le palier ou autres paramètres analogues.

5. Procédé selon une des revendications 1 à 3, caractérisé en ce que la modification de la vitesse intervient à intervalles réguliers.

6. Procédé selon une des revendications 1 à 5, caractérisé en ce que l'augmentation ou la réduction de la vitesse du rotor permet de maintenir les valeurs des paramètres de l'installation enregistrés dans les limites des valeurs de consigne.

7. Procédé selon la revendication 6, caractérisé en ce que, lorsqu'une valeur de consigne maximum prédéfinie pour la sollicitation du rotor ou un autre paramètre de l'installation est dépassée, les modifications de vitesses se répètent jusqu'à ce que ladite valeur tombe au-dessous de la valeur de consigne, le rotor recommençant alors à tourner à la vitesse nominale.

8. Procédé selon la revendication 6, caractérisé en ce que les modifications de vitesse se répètent jusqu'à ce que la sollicitation du rotor ou un autre paramètre de l'installation enregistrés tombent au-dessous d'une valeur de consigne minimum prédéfinie, le rotor recommençant alors à tourner à la vitesse nominale.

9. Procédé selon une des revendications 6 à 8, caractérisé en ce que les modifications de vitesse interviennent à intervalles prédéfinis, le cas échéant à intervalles constants lorsque la sollicitation du rotor ou autre paramètre de l'installation se situe dans une plage comprise entre la valeur de consigne maximum et la valeur de consigne minimum.

10. Procédé selon une des revendications 6 à 9, caractérisé en ce que les modificiations de la vitesse se font par coupure et remise en route de l'entraînement de l'axe du rotor, par modification des paramètres de fonctionnement d'un moteur prévu pour l'entraînement du rotor, à savoir la tension ou la fréquence dans le cas d'un moteur électrique, par changement du nombre de pôles d'un moteur électrique à nombre de pôles variable prévu pour fonctionner au moins sur deux vitesses pour l'entraînement de l'axe du rotor, par déclenchement d'un moteur pas-à-pas contrôlé par impulsions, dépendant de la fréquence, dans les modes de fonctionnement courant constant ou tension constante, par déclenchement électronique du moteur à courant continu de commande du rotor, réglé par thyristor, par action sur un réducteur, par action sur un embrayage reliant l'axe du rotor au moteur de commande ou par déclenchement d'un frein à courants de Foucault agissant sur l'axe du rotor directement ou indirectement par l'intermédiaire d'organes de transmission tels que courroies trapézoïdales, pignons ou autres, la commande de l'axe du rotor étant le cas échéant coupée auparavant ou simultanément.

11. Procédé selon une des revendications 6 à 10, caractérisé en ce que l'on obtient une réduction de vitesse de 2 à 80%, avantageusement de 3 à 60% et en particulier de 10 à 50%, et une augmentation de vitesse de 1 à 50%, avantageusement de 1 à 40% et en particulier de 10 à 30%.

12. Procédé selon une des revendications 6 à 11, caractérisé en ce que les modifications de la vitesse pour le fonctionnement dans une plage comprise entre la valeur de consigne supérieure et la valeur de consigne inférieure fixées pour la sollicitation du rotor ou un paramètre de l'installation représentent de 1 à 30%, avantageusement 1 à 20% de la vitesse nominale.

13. Procédé selon une des revendications 6 à 12, caractérisé en ce que la vitesse modifiée est maintenue pendant 10 ms à 50 s, avantageusement 50 ms à 30 s et en particulier de 3 à 20 s.

**14.** Procédé selon une des revendications 6 à 13, caractérisé en ce que le temps pendant lequel le rotor tourne à la vitesse nominale est au moins aussi long, avantageusement plus long que celui pendant lequel il tourne à une vitesse modifiée.

**15.** Procédé selon une des revendications 6 à 14, caractérisé en ce que l'arrivée du produit à traiter à l'installation est réglée en fonction de la vitesse du rotor ou que, en cas de réduction de la vitesse du rotor à une valeur zéro, l'arrivée du produit à traiter est interrompue au moins pendant une fraction du temps d'arrêt du rotor.

**16.** Procédé selon une des revendications 6 à 14, caractérisé en ce que, lorsque la valeur de consigne maximum fixée pour la sollicitation du rotor ou un paramètre de l'installation est atteinte, l'arrivée du produit à traiter est réduite à une valeur située entre 10% et 70%, avantageusement à 50% du débit nominal et que le débit est rétabli à 100% de la valeur nominale lorsque la valeur de consigne minimum est atteinte.

**17.** Procédé selon une des revendications 6 à 14 et la revendication 16, caractérisé en ce que la réduction de la vitesse du rotor intervient avec retard après réduction du débit du produit à traiter par rapport au débit nominal.

**18.** Procédé selon une des revendications 1 à 17, caractérisé en ce que la vitesse du rotor prédéfinie est réduite ou augmentée plusieurs fois de suite.

**19.** Procédé selon une des revendications 6 à 18, caractérisé en ce que le délai d'établissement de la vitesse réduite ou augmentée est de 1 ms à 3s, avantageusement 10 ms à 1 s et en particulier 500 ms.

**20.** Commande de rotor pour le rotor d'une installation de traitement en couche mince portant des éléments d'essuyage articulés sur le rotor ou de construction élastique, pour l'exécution du procédé selon une des revendications 1 à 19, caractérisé en ce que, pour éviter la formation de dépôts et/ou supprimer ceux qui se seraient formés à la surface du rotor et/ou sur les éléments d'essuyage, l'entraînement du rotor est construit pour obtenir une modification de la vitesse du rotor en cours de fonctionnement et que pour déclencher les modifications de vitesse, il est prévu soit au moins un dispositif de mesure d'un paramètre de l'installation permettant d'évaluer l'importance des dépôts, dont les signaux sont transmis à au moins une unité de commande du changement de vitesse du rotor, soit une unité de commande permettant d'obtenir une modification de la vitesse à intervalles prédéterminés.

**21.** Commande de rotor selon la revendication 20, caractérisée en ce que l'entraînement du rotor permet l'augmentation brusque ou la réduction brusque de la vitesse du rotor.

**22.** Commande de rotor selon la revendication 20 ou 21, caractérisée en ce qu'il est prévu au moins une minuterie pour limiter la durée du fonctionnement à une vitesse modifiée.

**23.** Commande de rotor selon une des revendications 20 à 22, caractérisée en ce que la sollicitation du rotor est mesurée, la valeur instantanée de la sollicitation étant transmise à un comparateur pour la comparer avec une valeur de consigne prédéfinie et que la vitesse de rotation peut être modifiée, en fonction de la comparaison ou du signal de sortie du comparateur, par un organe de commande déclenché par le comparateur.

**24.** Commande de rotor selon la revendication 23, caractérisée en ce qu'il est prévu un indicateur-calculateur de couple pour mesurer la sollicitation du rotor.

**25.** Commande de rotor selon la revendication 23, caractérisée en ce qu'il est prévu un convertisseur de courant watté pour mesurer le flux de courant correspondant à la sollicitation du rotor.

**26.** Commande de rotor selon la revendication 23, caractérisée en ce que dans le cas d'une transmission indirecte se faisant au moyen de courroies trapézoïdales, pignons, chaînes, courroies crantées ou autres, il est prévu un transducteur de force pour mesurer la pression mécanique s'exerçant verticalement sur l'axe du rotor et correspondant à la sollicitation de cet axe.

**27.** Commande de rotor selon une des revendications 20 à 25, caractérisée en ce que, pour comparer les valeurs instantanées de la sollicitation mesurées aux valeurs de consigne prédéfinies, il est prévu un dispositif de réglage électronique dont le signal de sortie permet de déclencher un organe de commande provoquant une modification de la vitesse.

28. Commande de rotor selon la revendication 27, caractérisée en ce qu'il est prévu un dispositif de réglage à microprocesseurs programmables.

**Fig. 1**

**Fig. 2**

Fig. 3

Fig. 4

**Fig. 5**